# EUROPEAN PATENT SPECIFICATION

(11) **EP 0 410 697 B1**
(45) Date of publication and mention of the grant of the patent: **25.01.1995**
(21) Application number: 90308097.6
(22) Date of filing: 24.07.1990
(51) Int. Cl.: C08L 83/07, C08L 83/05

(54) **Curable organopolysiloxane compositions**
Härtbare Organopolysiloxanzusammensetzungen
Compositions réticulables d'organopolysiloxane

(30) Priority: 25.07.1989 JP 192370/89
(43) Date of publication of application: 30.01.1991
(73) Proprietor: Shin-Etsu Chemical Co., Ltd., Chiyoda-ku Tokyo 100 (JP)
(72) Inventor: Ikeno, Masayuki, Annaka-shi, Gunma-ken (JP); Fujiki, Hironao, Taksaki-shi, Gunma-ken (JP)
(74) Representative: Diamond, Bryan Clive

(56) References cited:
- EP-A- 0 240 162
- GB-A- 2 073 765
- US-A- 4 772 515

## Description

This invention relates to curable compositions composed of organopolysiloxanes.

Cured silicone rubber gels (referred to simply as silicone gels, hereinafter) are used for electric or electronic potting or sealing, and as covering material for protection of control circuit elements, especially power transistors, integrated circuits, condensers and the like, against thermal and mechanical damages; for this purpose the silicone gels have good electrical insulation, stability of electrical characteristics and flexibility.

Various methods of preparing such silicone gels have been proposed. For instance, silicone rubbers have been formed in which the number of hydrogen atoms attached directly to a silicone atom amounts to one or less per one vinyl group attached directly to the silicon atom (JP-B-55-41705 and 55-38992).

However, compositions which can be converted to such silicone gels by curing, and the silicone gels obtained suffer from a defect that they are discolored through thermal deterioration.

Such a defect, though harmless in cases where electric insulation, electric characteristics, viscosity and the like are regarded as significant (because these properties of silicone gels are not changed by the discoloration) is a serious problem when optical characteristics are required of the silicone gels.

The discoloration of silicone gels which has accompanied thermal deterioration is known to be correlated to the amount of platinum used as the addition reaction catalyst, and the ratio of = SiH to =SiCH=CH₂ groups. Specifically, the extent of discoloration becomes less the smaller the amount of platinum used is and the higher is the =SiH:=SiCH=CH₂ ratio. Therefore, the above-described discoloration resulting from thermal deterioration seems to be preventable by reducing the amount of platinum used. However, reduction in the amount of platinum tends to cause curing troubles. When the factor of high =SiH:=SiCH=CH₂ ratio is added in particular, there can be an additional problem that change in hardness and a foaming phenomenon are apt to be caused by thermal deterioration.

With the intention of bringing about an improvement in the discoloration caused by thermal deterioration, there has been proposed the combined use of a polysiloxane containing per molecule at least two vinyl groups and one hydroxyl group attached directly to silicon atoms and silane containing one epoxy group and one alkoxy group per molecule (JP-B-55-35932). In addition, JP-A-62-39660 has disclosed a composition comprising an organopolysiloxane containing, attached directly to silicon atoms vinyl groups which number 0.1 to 2.0 on the average per one molecule and a hydrogensiloxane represented by the formula, R⁴Si(OSiR⁵₂H)₃ (wherein R⁴ represents an alkyl or phenyl group, and R⁵ represents an alkyl group). However, the silicone gels prepared from those compositions have a defect that their light transmittances at wavelengths shorter than 500 nm are lowered to 90 % or below after they have suffered thermal deterioration, which limits their utilization when optical quality is required.

Therefore, an object of this invention is to provide an organopolysiloxane gel composition which has reduced discoloration due to thermal deterioration.

We have now found that the use of an organohydrogen polysiloxane containing alkenyl groups and hydrogen atoms attached to silicon atoms at the molecular chain terminals is particularly effective.

According to this invention we provide an organopolysiloxane gel composition comprising
(A) an organopolysiloxane represented by the general formula: 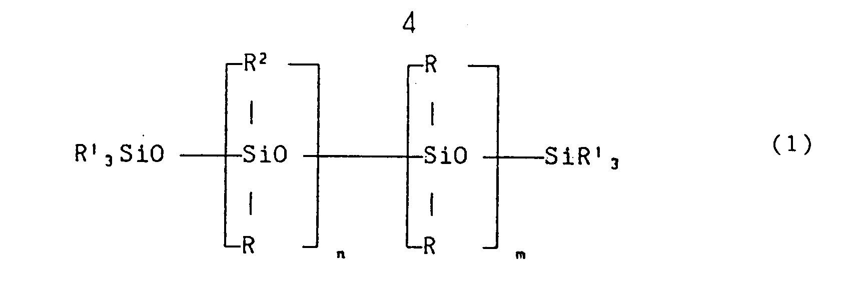 wherein R represents a substituted or unsubstituted monovalent hydrocarbon residue, other than an aliphatic unsaturated group; R¹ represents a substituted or unsubstituted monovalent hydrocarbon residue; R² represents an alkenyl group; and n and m each represents a positive integer:
(B) an organohydrogenpolysiloxane represented by the general formula: 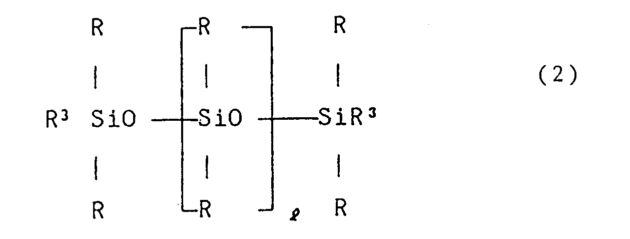 wherein R has the same meaning as R in the component (A); each R³ is an alkenyl group or a hydrogen atom, provided that the proportion of said alkenyl group and hydrogen atom is each on the statistical average of one per one molecule; and l represents a positive integer;
   the proportion of component (B) being such that the number of the hydrogen atoms attached to silicon atoms in (B) corresponds to from 0.1 to 4.0 per one of the alkenyl groups attached to silicon atoms in the component (A): and
(C) a catalytic amount of an addition-reaction catalyst. The term "statistic average" is used to include mixtures of alkenyl and hydrogen.

In the component (A) represented by the above general formula (1), R represents a substituted or unsubstituted monovalent hydrocarbon residue prefereably having 1 to 10 carbon atoms, more preferably 1 to 8 carbon atoms, except aliphatic unsaturated groups, with specific examples including alkyl groups such as methyl, ethyl, propyl, isopropyl, butyl and octyl, cycloalkyl groups such as cyclopentyl, cyclohexyl or cyclobutyl, aryl groups such as phenyl, naphthyl, tolyl or xylyl, aralkyl groups such as benzyl, phenylethyl or phenylpropyl, halogen derivatives of the above-cited groups such as chloromethyl, trifluoromethyl, trifluoropropyl, chlorophenyl or difluorophenyl, and cyanoalkyl groups such as β-cyanoethyl, γ-cyanopropyl or β-cyanopropyl.

Among these groups a methyl group is preferred over others in respects of the ease of synthesis and thermal resistance of the silicone gel to be prepared.

R¹ in the general formula (1) is a substituted or unsubstituted monovalent hydrocarbon residue preferably having 1 to 10 carbon atoms, more preferably 1 to 8 carbon atoms, with specific examples including alkyl, cycloalkyl, and cyanoalkyl as exemplified for R, alkenyl groups such as vinyl, allyl or 1-butenyl, aryl groups such as phenyl, naphthyl, tolyl, or xylyl, aralkyl groups such as benzyl, phenylethyl, phenylpropyl, and halogenated derivatives of the above-cited groups such as chloromethyl, trifluoromethyl, trifluoropropyl, chlorophenyl, dibromophenyl, tetrachlorophenyl and difluorophenyl.

R² is an alkenyl group, preferably containing 2 to 8 carbon atoms, more preferably 2 to 4 carbon atoms, e. g., vinyl, allyl or 1-butenyl; of these, a vinyl group is particularly favored from the standpoint of facility in synthesis.

The sum of the integers n and m should preferably be chosen so that the component (A) has a viscosity of from 50 to 100,000 cp, preferably 500 to 5,000 cp, at 25°C. This is because when the viscosity is below 50 cp, the composition of the invention is liable to flow, whereas when it is beyond 100,000 cp the composition has poor fluidity. 1cp = 100 Pa.S (SI unit).

Though it is not always necessary for the organopolysiloxane used by component (A) to have alkenyl groups attached to silicon atoms at both ends of the molecule, it is required for preventing the discoloration from occuring due to thermal deterioration, that on the average there is present, per molecule, at least one unit which contains an alkenyl group in a side chain and is represented by the formula 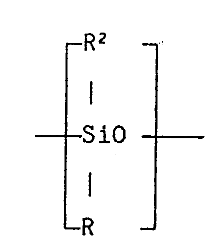
When the proportion of the side-chain alkenyl group amounts on the average to less than one per molecule, there is the risk that the resulting composition cannot be hardened satisfactorily, so cannot assume a gel form, and is subject to discoloration through thermal deterioration.

In the organohydrogen polysiloxane used as the component (B) and represented by the above formula (2), R has the same meaning as in the component (A), and R³ is a hydrogen atom or an alkenyl group preferably containing 2 to 8, more preferably 2 to 4 carbon atoms, such as vinyl, allyl or 1-butenyl; of these a vinyl group is particularly preferred in respect of facility of synthesis.

In the organohydrogenpolysiloxane used as component (B), the occurrence of the alkenyl group and the hydrogen atom (each attached to the terminal silicon atom) are each on the statistical average one per one molecule. This component not only acts as a chain extending agent, but also functions to prevent discoloration from occuring at high temperatures; this is a characteristic of this invention. The component (B) is compounded in such an amount that the number of the hydrogen atoms attached to silicon atoms in the component (B) corresponds to from 0.1 to 4.0, preferably from 0.5 to 1.5, per one of the alkenyl groups attached to silicon atoms in the component (A).

When the number of the hydrogen atoms corresponds to less than 0.1, the cross-linking reaction does not proceed adequately, so the silicon gel obtained is so soft that it still has flowability. On the other hand, when the number of the hydrogen atoms corresponds to more than 4.0, the silicone gel obtained becomes harder and harder with the lapse of time, and further there is a rish of its foaming.

The component (B) is not particularly limited with respect to its viscosity, but it is desirable from the economic point of view in its production that the viscosity should be controlled to below 1,000 cp at 25°C.

The catalyst used as component (C) in this invention is used for promoting the hydrosilylation reaction, and can be chosen appropriately from known ones, e.g., chloroplatinic acid, an alcohol-modified solution of chloroplatinic acid, a coordinate compound of chloroplatinic acid and olefins or vinylsiloxanes, tetrakis(triphenylphosphine) palladium, and chlorotris(triphenylphosphine)rhodium. Among them, the catalysts of the platinum type are used to particular advantage.

The above-described catalyst is used in a so-called catalytic amount. In general, its amount is adjusted to 0.1 to 100 ppm based on the total amount of the components (A) and (B) or 100 parts by weight of (A).

In addition to the above-described components (A) to (C), various other components can be contained in the composition of this invention, if needed. For instance, another silicone oil such as dimethylpolysiloxane, or raw rubber may be added in such an amount as not to impair the effect of this invention, for the purpose of controlling or modifying the flowability of the composition and the hardness of the cured composition. Also, a known reaction retarder or the like may be added.

The composition of the invention can be cured (to cross-link it) in known manner, to make a gel-like cured product.

This invention will now be illustrated in more detail by reference to the following examples, wherein all viscosity values were measured at 25°C.

### EXAMPLES

The ingredients illustrated below were mixed homogeneously in compounding ratios (by weight) shown in Table 1 to prepare compositions Numbered 1 to 7. The compositions Nos. 1 to 3 were prepared in accordance with this invention, while Nos. 4 to 7 were prepared for comparison.

### Organopolysiloxane I:

Dimethylpolysiloxane containing side-chain vinyl groups, which was represented by the following average constitutional formula,

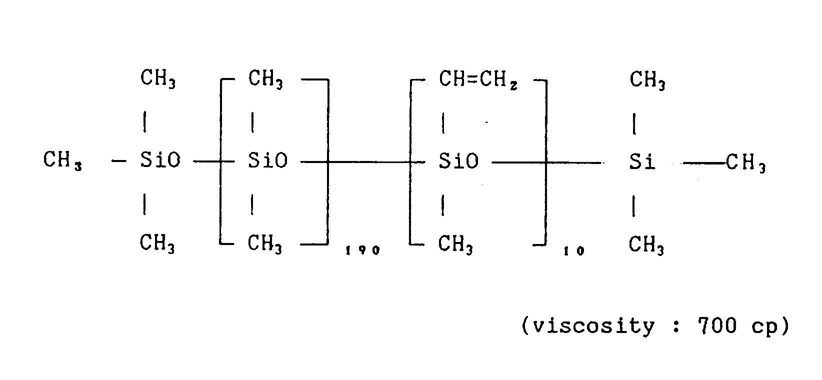

### Organopolysiloxane II:

Dimethylpolysiloxane containing vinyl groups, which was represented by the following average constitutional formula,

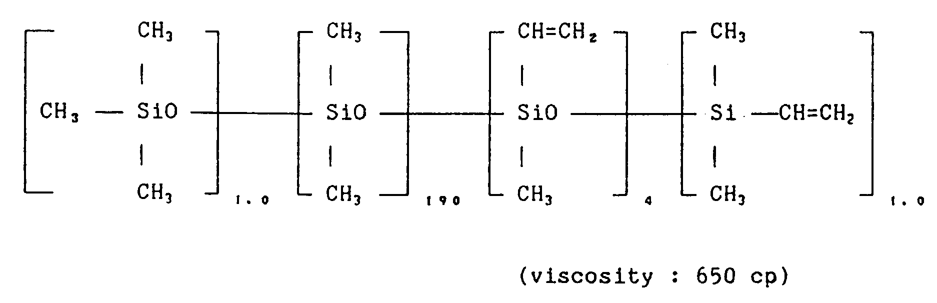

### Organopolysiloxane III:

Dimethylpolysiloxane containing side-chain vinyl groups, which was represented by the following average constitutional formula,

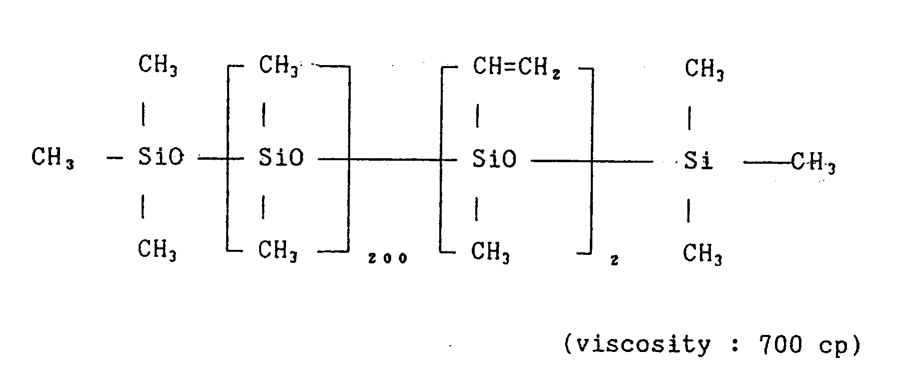

### Organopolysiloxane IV:

Dimethylpolysiloxane containing vinyl group, which was represented by the following average constitutional formula,

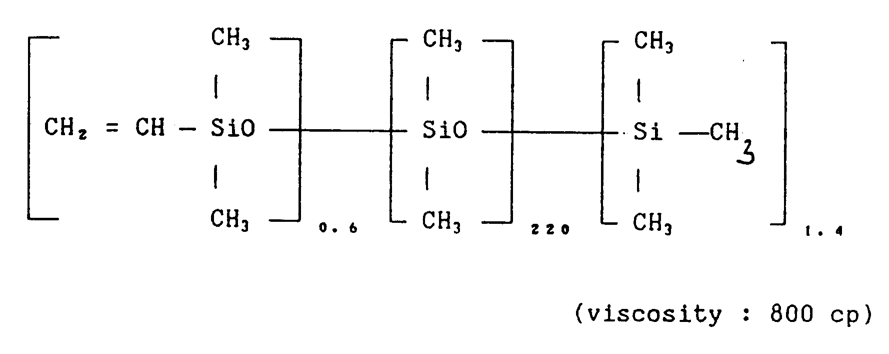

### Organopolysiloxane V:

Dimethylpolysiloxane containing vinyl groups on both molecular ends, which was represented by the following average constitutional formula,

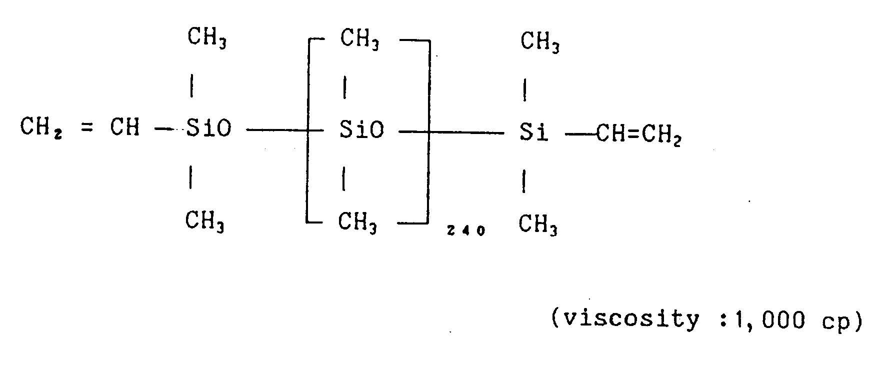

### Organopolysiloxane VI:

Methylhydrogenpolysiloxane containing vinyl group, which was represented by the average constitutional formula,

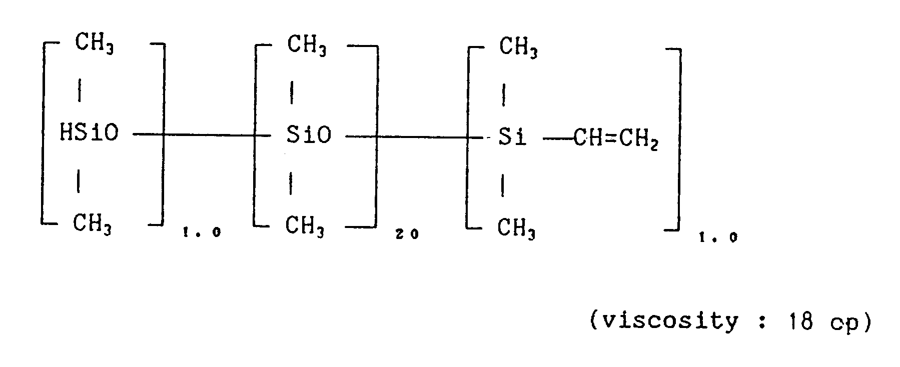

### Organopolysiloxane VII:

Methylhydrogenpolysiloxane represented by the average constitutional formula,

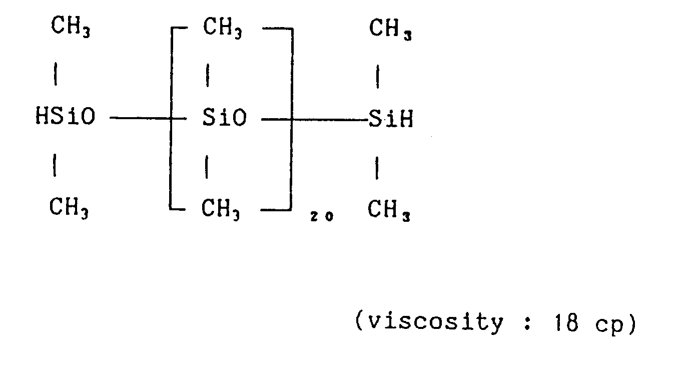

### Organopolysiloxane VIII:

Methylhydrogenpolysiloxane represented by the average constitutional formula,

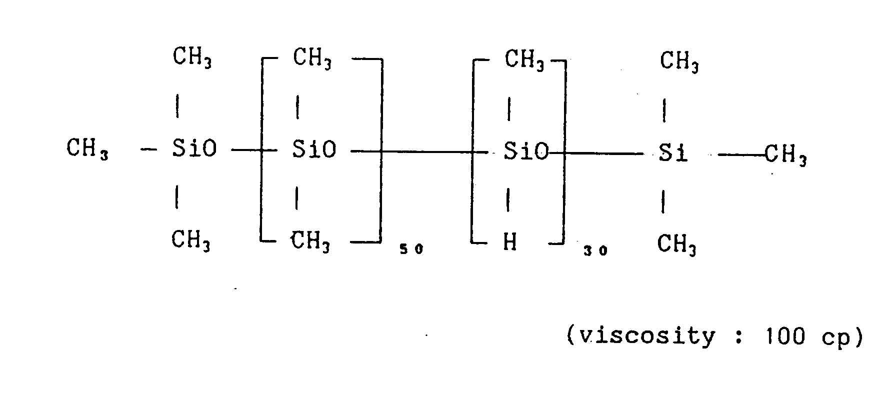

### Organopolysiloxane IX:

Methylhydrogenpolysiloxane represented by the average constitutional formula,

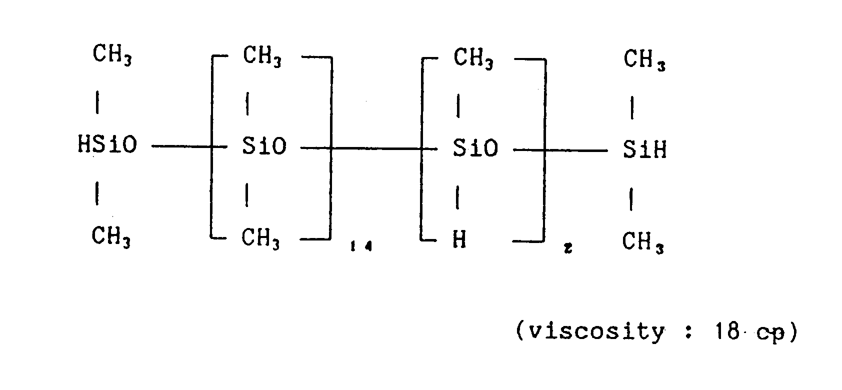

### Catalyst:

Compound obtained by heating a mixture of chloroplatinic acid with tetramethyldivinylsiloxane (platinum content: 1 wt%).

**Table 1**

| | Invention | | | Comparison | | | |
|---|---|---|---|---|---|---|---|
| Composition | No.1 | No.2 | No.3 | No.4 | No.5 | No.6 | No.7 |
| Polysiloxane I | 100 | 100 | | | | | |
| Polysiloxane II | | | 100 | | | | |
| Polysiloxane III | | | | 100 | | | |
| Polysiloxane IV | | | | | 100 | 100 | |
| Polysiloxane V | | | | | | | 100 |
| Polysiloxane VI | 42 | 42 | 42.5 | | | | |
| Polysiloxane VII | | | | 6.5 | | | |
| Polysiloxane VIII | | | | | 0.7 | 0.7 | |
| Polysiloxane IX | | | | | | | 2.1 |
| Catalyst | 0.07 | 0.14 | 0.07 | 0.05 | 0.05 | 0.10 | 0.05 |
| Platinum Content (ppm) | 5 | 10 | 5 | 5 | 5 | 10 | 5 |
| SiH/SiCH=CH₂ (by mole) | 0.4 | 0.4 | 1.0 | 0.6 | 1.0 | 1.0 | 0.55 |

Each of the thus prepared compositions Nos. 1 to 7 was heated at 150°C for one hour, and thereby underwent curing, so that each composition was converted to a gelled material. Each gelled material was examined for its ease of resistance to penetration with a 6.3 mm (1/4 inch) consistency tester according to JIS K2808, and for transmittance in the following manner. The results obtained are shown in Table 2.

### Transmittance Test:

The gelled materials from composition Nos. 1 to 7, which had been obtained by curing, were placed in a hot-air circulation type oven for a period of 100 hours under a temperature of 150°C. The thus heat-treated materials were examined for change in their transmittance to light of 400 nm with lapse of time.

**Table 2**

| | Invention | | | Comparison | | | |
|---|---|---|---|---|---|---|---|
| Gelled Material | No.1 | No.2 | No.3 | No.4 | No.5 | No.6 | No.7 |
| Penetration Degree | 80 | 80 | 84 | 65 | 100 | 95 | 70 |

| Transmittance (%) * | | | | | | | |
|---|---|---|---|---|---|---|---|
| Before Heat Treatment | 99 | 99 | 99 | 94 | 93 | 88 | 89 |
| After Heat Treatment | 95 | 92 | 95 | 88 | 88 | 75 | 77 |

| | | | | | | | |
|---|---|---|---|---|---|---|---|
| * : percentage on the tranmittance of water | | | | | | | |

The data shown in Table 2 confirms the superiority of the organopolysiloxane gel compositions of this invention as regards their resistance against discoloration due to thermal deterioration, regardless of the amount of platinum catalyst used and the molar ratio of the =SiH to =SiCH=CH₂ group in their molecule. The penetration degrees are consistent with the resistances to discoloration.

## Claims

1. An organopolysiloxane composition which comprises
(A) an organopolyslloxane represented by the general formula, 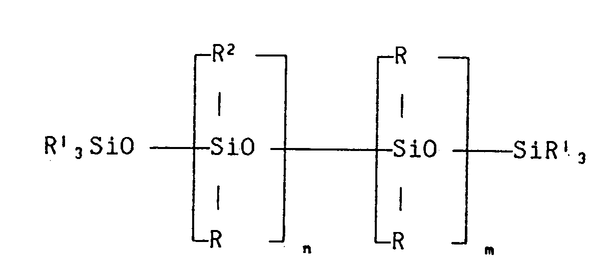 wherein R represents a substituted or unsubstituted monovalent hydrocarbon residue, other than an aliphatic unsaturated group; R¹ represents a substituted or unsubstituted monovalent hydrocarbon residue; R² represents an alkenyl group ; and n and m each represents a positive integer:
(B) an organohydrogenpolysiloxane represented by the general formula, 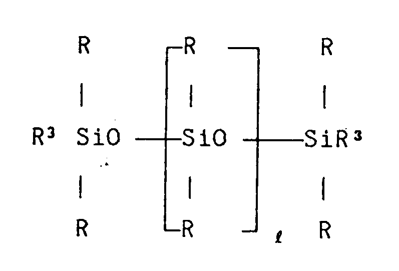 wherein R has the same meaning as R in the component (A); R³ is selected from alkenyl groups and hydrogen atom, provided that said alkenyl group and said hydrogen atom are each present on the statistical average at a level of one per molecule, and l represents a positive integer;
and wherein the proportion of component (B) to (A) is such that the number of the hydrogen atoms attached to silicon atoms in (B) corresponds to from 0.1 to 4.0 per one alkenyl group attached to silicon atoms in the component (A); and
(C) a catalytic amount of an addition-reaction catalyst.

2. An organopolysiloxane composition as claimed in Claim 1, wherein R in component (A) is a methyl group.

3. An organopolysiloxane composition as claimed in Claim 1 or 2, wherein R³ in component (A) is a vinyl group.

4. An organopolysiloxane composition as claimed in Claim 1,2 or 3, wherein the sum of (n + m) is a number selected so that component (A) has a viscosity of 50 - 100,000 cp at 25°C.

5. An organopolysiloxane composition as claimed in Claim 4, wherein said number is selected so that said viscosity is 500 to 5,000 cp.

6. An organopolysiloxane composition as claimed in any preceding claim, wherein R³ in component (B) is a vinyl group or hydrogen atom.

7. An organopolysiloxane composition as claimed in any preceding claim, wherein said proportion of component (B) is such that the number of the hydrogen atoms attached to silicon atoms in the component (B) corresponds to from 0.5 to 1.5 per one alkenyl group in the component (A).

8. An organopolysiloxane composition as claimed in any preceding claim, wherein the viscosity of component (B) is less than 1,000 cp at 25°C.

9. An organopolysiloxane composition as claimed in any preceding claim, wherein the catalyst (C) is of the platinum type.

10. An organopolysiloxane composition as claimed in any preceding claim, wherein the content of the catalyst is 0.1 - 100 ppm based on 100 parts by weight of the component (A).

11. A gel-like cured product obtained by curing a composition as claimed in any preceding claim.

## Patentansprüche

1. Organopolysiloxanzusammensetzung umfassend
(A) ein Organopolysiloxan gemäß der allgemeinen Formel 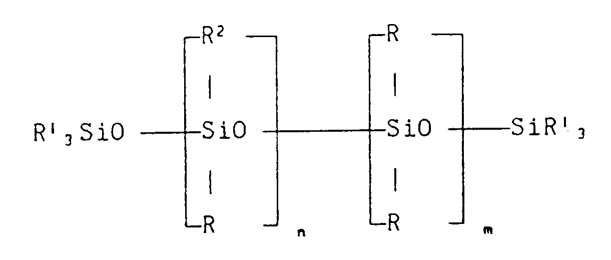 wobei R einen substituierten oder nichtsubstituierten monovalenten Hydrocarbonrest bedeutet, anders als eine aliphatische ungesättigte Gruppe; R¹ bedeutet einen substituierten oder nichtsubstituierten monovalenten Hydrocarbonrest; R² bedeutet eine Alkenylgruppe; und n und m stellen jeweils eine positive ganze Zahl dar:
(B) ein Organohydrogenpolysiloxan der allgemeinen Formel 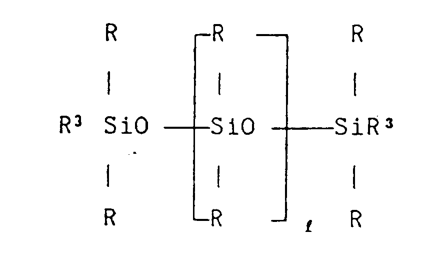 wobei R die gleiche Bedeutung hat wie R in der Formel (A); R³ ausgewählt ist aus Alkenylgruppen und Wasserstoffatom, vorausgesetzt, daß die Alkenylgruppe und das Wasserstoffatom jeweils anwesend sind im statistischen Durchschnitt auf einem Niveau von einem pro Molekül und l eine positive ganze Zahl ist;
und wobei das Verhältnis der Komponente (B) zu (A) so gewählt ist, daß die Anzahl der Wasserstoffatome, die an Silikonatomen in (B) hängen, zwischen 0,1 und 4,0 pro Alkenylgruppe entspricht, die an Silikonatomen der Komponente (A) hängen; und
(C) eine katalytische Menge eines Anlagerungs-Reaktionskatalysators.

2. Organopolysiloxanzusammensetzung nach Anspruch 1, dadurch gekennzeichnet, daß R in der Komponente (A) eine Methylgruppe ist.

3. Organopolysiloxanzusammensetzung nach Anspruch 1 oder 2, dadurch gekennzeichnet, daß R² in der Komponente (A) eine Vinylgruppe ist.

4. Organopolysiloxanzusammensetzung nach einem der Ansprüche 1 bis 3, wobei die Summe von (n + m) eine Zahl ist, die so ausgewählt ist, daß die Komponente (A) eine Viskosität von 50 - 100,000 cp bei 25°C aufweist.

5. Organopolysiloxanzusammensetzung nach Anspruch 4, dadurch gekennzeichnet, daß die Zahl so gewählt ist, daß die genannte Viskosität zwischen 500 und 5,000 cp liegt.

6. Organopolysiloxanzusammensetzung nach einem der vorhergehenden Ansprüche, wobei R³ in der Komponente (B) eine Vinylgruppe oder ein Wasserstoffatom ist.

7. Organopolysiloxanzusammensetzung nach einem der vorhergehenden Ansprüche, wobei die Proportion der Komponente (B) so gewählt ist, daß die Zahl der Wasserstoffatome an Silikonatomen in der Komponente (B) dem 0,5- bis 1,5-fachen pro Alkenylgruppe in der Komponente (A) entspricht.

8. Organopolysiloxanzusammensetzung nach einem der vorhergehenden Ansprüche, wobei die Viskosität der Komponente (B) geringer als 1,000 cp bei 25°C ist.

9. Organopolysiloxanzusammensetzung nach einem der vorhergehenden Ansprüche, worin der Katalysator (C) vom Platintyp ist.

10. Organopolysiloxanzusammensetzung nach einem der vorhergehenden Ansprüche, wobei die Menge des Katalysators 0,1 - 100 ppm basierend auf 100 Gewichtsteilen der Komponente (A) beträgt.

11. Gelartiges gehärtetes Produkt, wie es durch Härten einer Zusammensetzung nach einem der vorhergehenden Ansprüche erhalten wird.

## Revendications

1. Une composition d'organipolysiloxane qui comprend (A) un organopolysiloxane représenté par la formule générale : 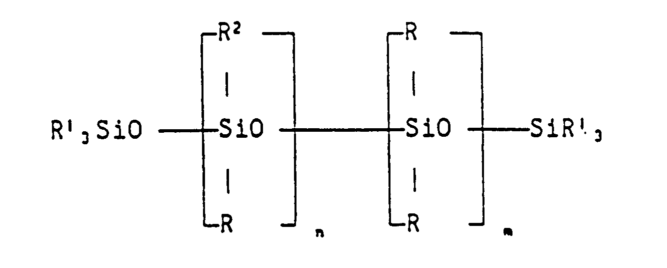 dans laquelle R représente un résidu d'hydrocarbone monovalent substitué ou non substitué, à l'exception d'un groupe aliphatique insaturé ; R¹ représente un résidu d'hydrocarbure monovalent substitué ou non substitué ; R² représente un groupe alcényle : et n et m représentent chacun un nombre entier positif ;
(B) un organohydrogènepolysiloxane représenté par la formule générale : 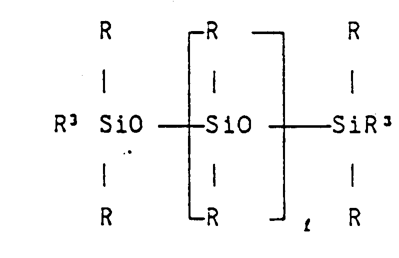 dans laquelle R a la même signification que R dans le composant (A) ; R³ est sélectionné parmi des groupes alcényles et un atome d'hydrogène, à condition que le groupe alcényle et l'atome d'hydrogène soient chacun présents en moyenne statistique à raison d'un par molécule, et 1 représente un nombre entier positif ;
et dans laquelle le rapport entre les composants (B) et (A) est tel que le nombre des atomes d'hydrogène fixés aux atomes de silicone de (B) soit compris entre 0,1 et 4,0 par groupe alcényle fixé aux atomes de silicone du composant (A) ; et
(C) une quantité catalytique d'un catalyseur de réaction d'addition.

2. Une composition organopolysiloxane selon la Revendication 1, dans laquelle R dans le composant (A) est un groupe méthyle.

3. Une composition organopolysiloxane selon la Revendication 1 ou 2, dans laquelle R² dans le composant (A) est un groupe vinyle.

4. Une composition d'organopolysiloxane selon la Revendication 1, 2 ou 3, dans laquelle la somme de (n + m) est un nombre sélectionné de telle sorte que le composant (A) ait une viscosité de 50 à 100 000 cp à 25°C.

5. Une composition d'organopolysiloxane selon la Revendication 4, dans laquelle ce nombre est sélectionné de telle sorte que cette viscosité soit comprise entre 500 et 5 000 cp.

6. Une composition d'organopolysiloxane selon l'une ou l'autre des revendications qui précèdent, dans laquelle R³ dans le composant (B) est un groupe vinyle ou un atome d'hydrogène.

7. Une composition d'organopolysiloxane selon l'une ou l'autre des revendications qui précèdent, dans laquelle la proportion du composant (B) est telle que le nombre des atomes d'hydrogène fixés aux atomes de silicone dans le composant (B) soit compris entre 0,5 et 1,5 par groupe alcényle présent dans le composant (A).

8. Une composition d'organopolysiloxane selon l'une ou l'autre des revendications qui précèdent, dans laquelle la viscosité du composant (B) est inférieure à 1 000 cp à 25°C.

9. Un composition d'organopolysiloxane selon l'une ou l'autre des revendications qui précèdent, dans laquelle le catalyseur (C) est de type platine.

10. Une composition d'organopolysiloxane selon l'une ou l'autre des revendications qui précèdent, dans laquelle la teneur en catalyseur est de 0,1 à 100 ppm sur la base de 100 parties en poids du composant (A).

11. Un produit réticulé de type gel obtenu par réticulation d'une composition selon l'une ou l'autre des revendications qui précèdent.
